# EUROPÄISCHE PATENTSCHRIFT

(11) **EP 3 762 637 B1**
(45) Veröffentlichungstag und Bekanntmachung des Hinweises auf die Patenterteilung: **21.12.2022**
(21) Anmeldenummer: 19711028.1
(22) Anmeldetag: 06.03.2019
(51) Int. Cl.: F16K 5/06, F01P 1/00, F16K 11/087

(54) **DICHTUNGSANORDNUNG UND FLUIDREGELVENTIL**
SEAL ASSEMBLY AND FLUID REGULATING VALVE
ENSEMBLE D'ÉTANCHÉITÉ ET SOUPAPE DE RÉGLAGE DE FLUIDE

(30) Priorität: 07.03.2018 DE 102018203450
(43) Veröffentlichungstag der Anmeldung: 13.01.2021
(73) Patentinhaber: Vitesco Technologies GmbH, 93055 Regensburg (DE)
(72) Erfinder: SEEGER, Armin, 65824 Schwalbach a.Ts. (DE); YAN, Chunxiao, 65824 Schwalbach a.Ts. (DE); EISSLER, Jörg, 65824 Schwalbach a.Ts. (DE); LIENIG, Klaus-Jürgen, 65824 Schwalbach a.Ts. (DE); RUHSTORFER, Monika, 65824 Schwalbach a.Ts. (DE); CHAVAN, Prashant, 65824 Schwalbach a.Ts. (DE)
(74) Vertreter: Vitesco Technologies
(86) Internationale Anmeldenummer: PCT/EP2019/055591
(87) Internationale Veröffentlichungsnummer: WO 2019/170761

(56) Entgegenhaltungen:
- DE-A1-102009 014 047
- DE-A1-102015 216 498
- DE-U1-202017 000 564

## Beschreibung

Die vorliegende Erfindung betrifft eine Dichtungsanordnung und ein Fluidregelventil mit einer solchen Dichtungsanordnung. Unter einem Fluidregelventil ist dabei insbesondere ein Kühlwasserregelventil zur Verwendung in einem Fahrzeug zu verstehen. Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Die DE 10 2015 216 498 A1 offenbart eine Ventilanordnung mit einem sich in einer Axialrichtung erstreckenden Fluidzuführkanal, einem relativ dazu beweglich angeordneten Ventilglied und einer Dichtungsanordnung zur Abdichtung eines Übergangs zwischen einem Ende des Fluidzuführkanals und dem Ventilglied. Die Dichtungsanordnung weist zwei einander zumindest abschnittsweise überlappende und relativ zueinander in Axialrichtung beweglich angeordnete Dichthülsenteile auf, die zwischen sich einen in Axialrichtung verlaufenden Dichtspalt aufweisen.

Weiterer Stand der Technik ist in den Druckschriften DE 10 2009 014 047 A1 und DE 20 2017 000 564 U1 offenbart.

Aufgabe der vorliegenden Erfindung ist es, eine Dichtungsanordnung zur Verwendung in einem Fluidregelventil, insbesondere in Gestalt eines Kühlwasserregelventils bereitzustellen, welche höchsten Anforderungen an eine Langzeit-Dichtheit unter bekanntlich großen Temperaturschwankungen einer Verbrennungsmotorenperipherie und/oder einer Elektromotorenperipherie gerecht wird. Die Dichtungsanordnung soll darüber hinaus kostengünstig herstellbar sein und einen Toleranzausgleich über einen breiten Toleranzbereich ermöglichen.

Diese Aufgabe wird durch den Anspruch 1 gelöst, der eine Dichtungsanordnung zur Verwendung in einem Fluidregelventil eines Fahrzeugs unter Schutz stellt. Es wird ferner ein Fluidregelventil mit einer solchen Dichtungsanordnung unter Schutz gestellt (vgl. Anspruch 8) . Vorteilhafte Ausführungsformen der Erfindung sind Gegenstand der Unteransprüche.

Es wird eine Dichtungsanordnung zur Verwendung in einem Fluidregelventil eines Fahrzeugs vorgeschlagen. Die Dichtungsanordnung umfasst dabei ein erstes, separates Dichtelement zur dichtenden Anlage gegen einen stellbaren Ventilkörper des Fluidregelventils, ein zweites, separates Dichtelement zur dichtenden Anlage gegen ein Ventilgehäuse des Fluidregelventils sowie ein separates, elastisches Zwischenstück, welches zwischen dem ersten Dichtelement und dem zweiten Dichtelement zur elastischen Beabstandung der beiden Dichtelemente in einer axialen Richtung der Dichtungsanordnung angeordnet ist. Das erste Dichtelement und das zweite Dichtelement sind dabei zumindest in einer Einbaulage der Dichtungsanordnung im Fluidregelventil in der axialen Richtung der Dichtungsanordnung miteinander formschlüssig gefügt.

Die formschlüssige Fügung positioniert die beiden Dichtelemente zueinander, so dass sich die beiden Dichtelemente gegeneinander abstützen können.

Nach einer Ausführungsform sind das erste Dichtelement und das zweite Dichtelement bereits in einer Montagelage der Dichtungsanordnung, d.h. nach einem Zusammenbau der Dichtungsanordnung und vor einem Einbau der Dichtungsanordnung in das Fluidregelventil, miteinander formschlüssig gefügt. Dies erleichtert sowohl die Montage bzw. den Zusammenbau als auch den Einbau der Dichtungsanordnung.

Erfindungsgemäß sind an zwei einander gegenüber liegenden Stirnseiten der beiden Dichtelemente je ein umlaufender Vorsprung ausgebildet, wobei die einander gegenüber liegenden Vorsprünge entweder bereits in einer Montagelage der Dichtungsanordnung - d.h. nach einem Zusammenbau der Dichtungsanordnung und vor einem Einbau der Dichtungsanordnung in das Fluidregelventil - oder erst durch die Verpressung des Zwischenstücks in einer Einbaulage der Dichtungsanordnung im

Fluidregelventil formschlüssig ineinander greifen, indem sie in der axialen Richtung zumindest teilweise miteinander überlappen.

Dabei sind die beiden umlaufenden Vorsprünge bezüglich einer Dichtungsöffnung radial innen liegend auf der jeweiligen Stirnseite des Dichtelements angeordnet bzw. angeformt, so dass das Zwischenstück die beiden Vorsprünge dichtend umschließt.

Es wird ferner ein Fluidregelventil mit zumindest einer Dichtungsanordnung der zuvor beschriebenen Art zur Abdichtung eines Anschlussbereiches des Fluidregelventils, insbesondere in Gestalt eines Mehrwege-Regelventils vorgeschlagen.

Es wird ferner eine Verwendung eines solchen Fluidregelventils als Kühlwasserregelventil vorgeschlagen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig.1: eine Ausführungsform einer vorgeschlagenen Dichtungsanordnung,
- Fig.2: die in Fig.1 gezeigte Dichtungsanordnung in einer Explosionsdarstellung,
- Fig.3: die in Fig.1 gezeigte Dichtungsanordnung in einer Querschnittsdarstellung und in einer Montagelage,
- Fig.4: die in Fig.1 gezeigte Dichtungsanordnung in einer Querschnittsdarstellung und in einer Einbaulage und
- Fig.5: eine Kühlwasseregelventileinheit.

Gleiche oder gleichwirkende Merkmale sind über alle Figuren hinweg mit denselben Bezugszeichen gekennzeichnet.

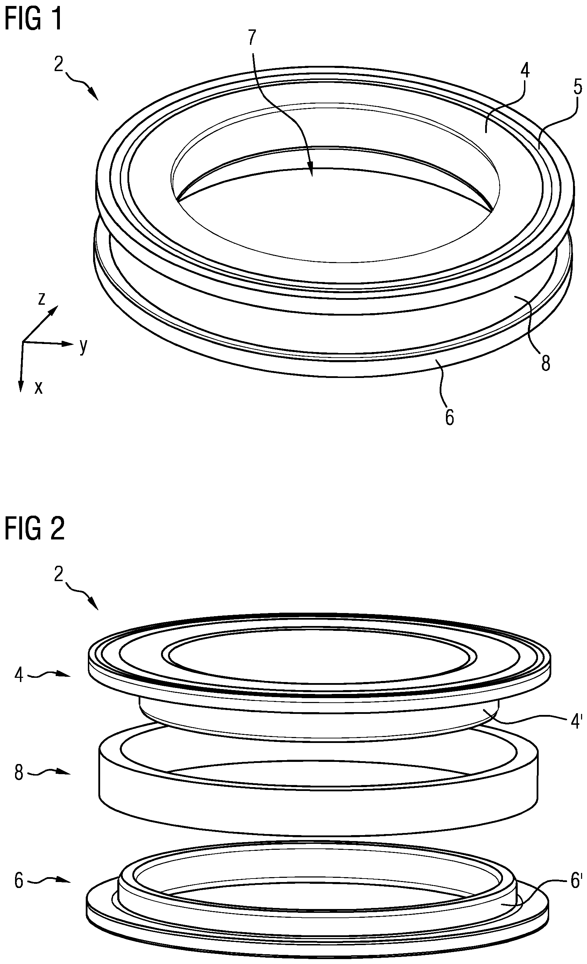

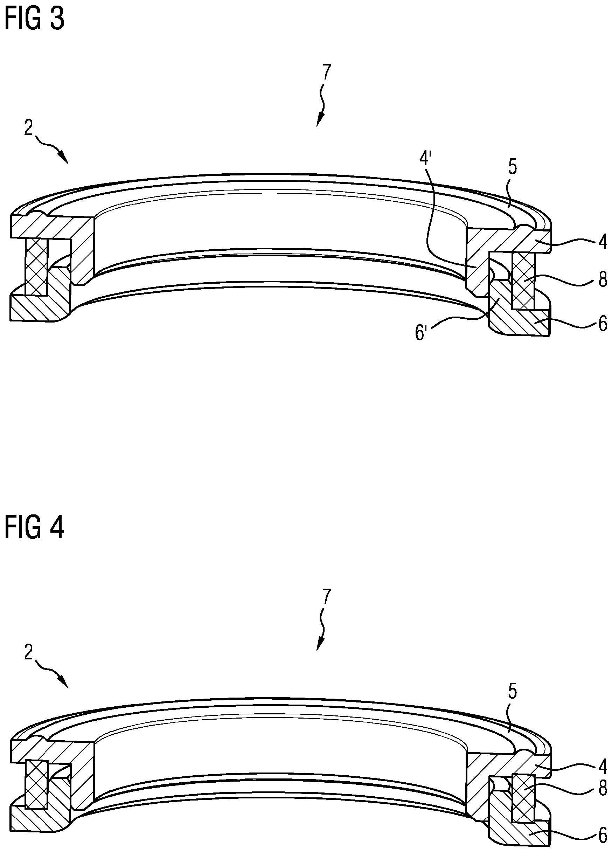

Die in Fig.1 gezeigte kreisringförmige Dichtungsanordnung 2 bzw. mehrteilige Dichtung 2 umfasst ein erstes Dichtelement 4, ein zweites Dichtelement 6 sowie ein dazwischen angeordnetes, elastisch verformbares und geschlossen umlaufendes Zwischenstück 8, welches die beiden Dichtelemente 4, 6 in einer axialen Richtung der Dichtungsanordnung (vgl. X-Achse) elastisch zueinander beabstandet. An zwei einander gegenüber liegenden Stirnseiten der beiden Dichtelemente 4, 6 (vgl. etwa Fig.3) sind dabei jeweils ein umlaufender Vorsprung 4^{l}, 6^{l} ausgebildet. Das Zwischenstück 8 ist dabei auf das zweite Dichtelement 6 aufgezogen, so dass es außenseitig am Vorsprung 6^{l} sowie an der Stirnseite des Dichtelements 6 anliegt (vgl. etwa Fig.3). Die beiden Vorsprünge 4^{l}, 6^{l} sind dabei in einer radialen Richtung so zueinander versetzt ausgerichtet, dass sie in einer Montagelage (veranschaulicht durch Fig.3) - d.h. nach einem Zusammenbau der Dichtungsanordnung 2 - bereits formschlüssig ineinander greifen, indem sie in der axialen Richtung teilweise miteinander überlappen. Dabei schiebt sich das erste Dichtelement 4 unter das zweite Dichtelement 6. Fig.4 hingegen veranschaulicht die Dichtungsanordnung 2 in einer Einbaulage, etwa in einem Kühlwasserregelventil, in welcher das Zwischenstück 8 verpresst ist.

Fig.3 bspw. veranschaulicht, dass die beiden Vorsprünge 4^{l}, 6^{l} bezüglich einer Dichtungsöffnung 7 (vgl. Fig.1) radial innen liegend auf der jeweiligen Stirnseite des Dichtelements 4, 6 angeordnet bzw. angeformt sind, so dass das Zwischenstück 8 die dazu innenliegende Überlappung der beiden Vorsprünge 4^{l}, 6^{l} dichtend umschließt.

Das in den Figuren (Fig.1 bis Fig.4) dargestellte Zwischenstück 8 kann z.B. außenseitig eine umlaufende, hydraulisch kraftverstärkende Nut, etwa in Gestalt einer V-förmigen Nut aufweisen (nicht dargestellt). Grundsätzlich ist das Zwischenstück hinsichtlich seiner Formgebung frei gestaltbar, d.h., dass anstelle der in den Figuren dargestellten kreisringförmigen bzw. ringförmigen Ausbildung auch eine im Wesentlichen kreisringförmige bzw. ringförmige Ausbildung des Zwischenstücks 8 denkbar ist. Das Zwischenstück 8 ist dabei zweckmäßigerweise so gestaltet und ausgelegt, dass es eine gewünscht vorteilhafte Kraft-Weg-Kennlinie im Sinne einer Systemeigenschaft beschreibt. Unter einer solch vorteilhaften Kraft-Weg-Kennlinie ist z.B. eine Kennlinie zu verstehen, bei der die auf das Zwischenstück 8 aufgebrachte Kraft mit zunehmendem Verformungsweg des Zwischenstücks 8 nur geringfügig innerhalb gewisser Grenzen zunimmt, wobei sich die Zunahme progressiv, linear und/oder degressiv darstellen kann.

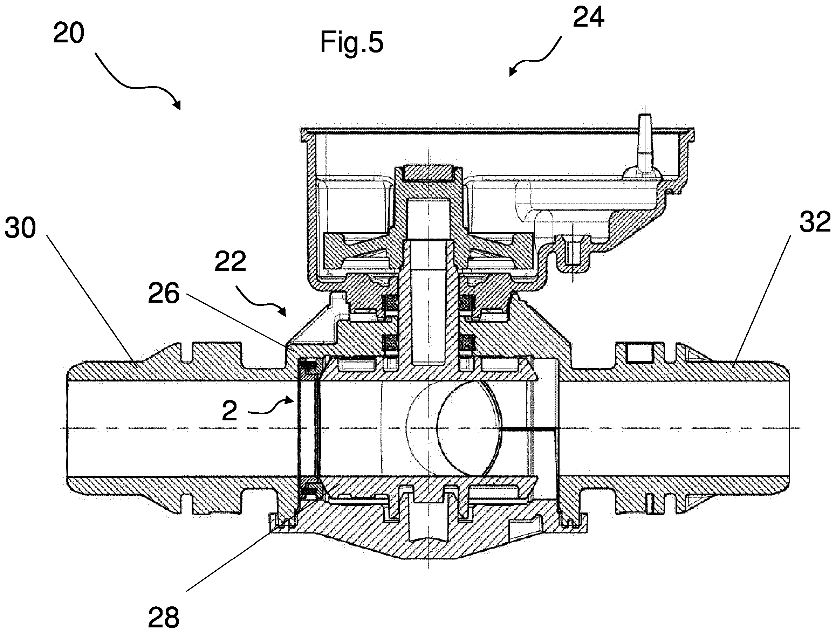

Allen zuvor beschrieben Ausführungen ist dabei gemein, dass zumindest am Dichtelement 4, welches zur statisch dichtenden Anlage gegen einen stellbaren Ventilkörper 28 eines Fluidregelventils 22 (vgl. Fig.5) vorgesehen ist, dichtflächenseitig zweckmäßigerweise ein umlaufend vorspringender Wulst 5 angeformt sein kann (vgl. Fig.3, Fig.4), der eine linienförmige und/oder flächenförmige Abdichtung bewirkt. Der Wulst 5 kann dabei bezüglich der Dichtungsöffnung 7 außenliegend auf der der Ventilkörperfläche zugewandten Stirnfläche des Dichtelements 4 angeformt sein. Grundsätzlich ließe sich ein solcher Wulst 5 in analoger Weise auch am Dichtelement 6 vorsehen, welches zur dynamisch dichtenden Anlage gegen ein Ventilgehäuse 26 des Fluidregelventils 22 (vgl. Fig.5) vorgesehen ist.

Ferner ist allen zuvor beschrieben Ausführungen gemein, dass zumindest das erste Dichtelement 4 als ein Hart-Dichtelement ausgebildet ist. Vorzugsweise ist aber auch das zweite Dichtelement 6 als ein Hart-Dichtelement ausgebildet. Unter einem solchen Hart-Dichtelement ist dabei ein Dichtelement zu verstehen, welches zumindest an der dichtenden Kontaktstelle - ob linienförmig und/oder flächenförmig dichtwirkend - im Unterschied zum Zwischenstück 8 elastisch nicht verformbar ist. Grundsätzlich kann dieses Hart-Dichtelement bspw. auch vollumfänglich aus PTFE (PTFE steht für Polytetrafluorethylen) und/oder dergleichen mehr gefertigt, bspw. gespritzt sein. Alternativ dazu könnte das Hart-Dichtelement auch aus einem Kunststoff ausgebildet sein, der dichtseitig entsprechend hart beschichtet ist, etwa mit PTFE und/oder dergleichen mehr. Um Kosten einzusparen, könnte das zweite Dichtelement 6 auch nur aus einem gegenüber dem ersten Dichtelement 4 weicheren und kostengünstigeren Kunststoff ausgebildet sein.

Das Zwischenstück 8 hingegen - in Gestalt eines geschlossen umlaufenden Profils - ist aus einem elastisch verformbaren Kunststoff ausgebildet, etwa einem Elastomer etc., so dass sich die besagte axiale Beabstandung der beiden Dichtelemente 4, 6 entsprechend einer auszugleichenden Längentoleranzlage durch eine entsprechend elastische Verformung des Zwischenstücks 8 einstellen kann. Diese elastische Verformung bewirkt zudem die gewünschte Verspannung der Dichtungsanordnung 2 bzw. mehrteiligen Dichtung 2 in ihrer Einbaulage.

Zwei Hart-Dichtelemente 4, 6 als solche, etwa in Gestalt zweier PTFE-Hart-Dichtelemente, in Verbindung mit dem Elastomer-Zwischenstück 8 bilden bereits eine Anordnung von gut aneinander haftenden Einzelteilen, die sich als eine Einheit leicht in das Fluidregelventil 22 verbauen lassen. Hinzu kommt, dass durch die beiden PTFE-Hart-Dichtelemente 4, 6 eine Verkantung des Elastomer-Zwischenstücks 8 beim Verbau vorteilhafterweise vermieden wird.

Fig.5 veranschaulicht eine Einbaulage der vorgeschlagenen Dichtungsanordnung 2 in einer Kühlwasserregelventileinheit 20, die neben einem Mehrwege-Kühlwasserregelventil 22 auch eine Aktuatoreinheit 24 zur Steuerung des Mehrwege-Kühlwasserregelventils 22 aufweist. Zwischen jeweils einem der beiden dargestellten Ventilanschlüsse 30, 32 und dem durch die Aktuatoreinheit 24 verschwenkbar stellbaren Ventilkörper 28 ist dabei solche eine Dichtungsanordnung 2 vorgesehen, wobei das erste Dichtelement 4 statisch dichtend am stellbaren Ventilkörper 28 und das zweite Dichtelement 6 dynamisch dichtend am Ventilgehäuse 26 anliegt. In der Fig.5 ist dabei der Einfachheit halber nur eine Dichtungsanordnung 2 gezeigt.

Aus der Darstellung in Fig.5 wird ersichtlich, dass ein in den Zwischenraum zwischen den beiden Dichtelementen 4, 6 eindringendes und unter Druck stehendes Kühlwasser gegen die beiden Dichtelemente 4, 6 wirkt und somit deren dichtende Wirkung fluidisch bzw. hydraulisch verstärkt. Diese fluidische bzw. hydraulische Dichtwirkung ließe sich durch die zuvor beschriebene, außenseitig umlaufende Nut am Zwischenstück 8 (nicht dargestellt), die als solche fluidisch bzw. hydraulisch kraftverstärkend wirkt, weiter verstärken.

Die im Rahmen dieser Offenbarung vorgeschlagene Dichtungsanordnung ist zum einen kostengünstig herstellbar und zum anderen über einen relativ breiten Längentoleranzbereich toleranzausgleichend, und dies in Verbindung mit einer Langzeitdichtwirkung. In Bezug auf das zuvor beschriebene Mehrwege-Kühlwasserregelventil 22 (vgl. Fig.5) lassen sich mittels der vorgeschlagenen Dichtungsanordnung je nach Auslegung kumulierte Längentoleranzen von bis zu 1mm (≤ 1mm) oder auch darüber hinaus (≥ 1mm) ausgleichen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Dichtungsanordnung zur Verwendung in einem Fluidregelventil, umfassend:
ein erstes, separates Dichtelement (4) zur dichtenden Anlage gegen einen stellbaren Ventilkörper des Fluidregelventils,
ein zweites, separates Dichtelement (6) zur dichtenden Anlage gegen ein Ventilgehäuse des Fluidregelventils sowie ein separates, elastisch verformbares Zwischenstück (8), welches zwischen dem ersten Dichtelement (4) und dem zweiten Dichtelement (6) zur elastischen Beabstandung der beiden Dichtelemente (4, 6) angeordnet ist,
wobei das erste Dichtelement (4) und das zweite Dichtelement (6) zumindest in einer Einbaulage der Dichtungsanordnung (2) im Fluidregelventil in einer axialen Richtung der Dichtungsanordnung miteinander formschlüssig gefügt sind,
wobei an zwei einander gegenüber liegenden Stirnseiten der beiden Dichtelemente (4, 6) je ein umlaufender Vorsprung (4^{l}, 6^{l}) ausgebildet sind, wobei die einander gegenüber liegenden Vorsprünge (4^{l}, 6^{l}) entweder bereits in einer Montagelage der Dichtungsanordnung oder erst durch die Verpressung des Zwischenstücks (8) in einer Einbaulage der Dichtungsanordnung im Fluidregelventil formschlüssig ineinander greifen, indem sie in der axialen Richtung zumindest teilweise miteinander überlappen, **dadurch gekennzeichnet, dass**
die beiden Vorsprünge (4^{l}, 6^{l}) bezüglich einer Dichtungsöffnung (7) innen liegend angeordnet sind, so dass das Zwischenstück (8) die die dazu innenliegende Überlappung der beiden Vorsprünge (4^{l}, 6^{l}) dichtend umschließt.

2. Dichtungsanordnung nach Anspruch 1, wobei das erste Dichtelement (4) und das zweite Dichtelement (6) bereits in einer Montagelage der Dichtungsanordnung (2) miteinander formschlüssig gefügt sind.

3. Dichtungsanordnung nach einem der vorhergehenden Ansprüche, wobei das Zwischenstück (8) eine außenseitig umlaufende, hydraulisch kraftverstärkende Nut aufweist.

4. Dichtungsanordnung nach Anspruch 3, wobei die Nut V-förmig ausgebildet ist.

5. Dichtungsanordnung nach einem der vorhergehenden Ansprüche, wobei die beiden Dichtelemente (4, 6) und das Zwischenstück (8) jeweils ringförmig ausgebildet sind und eine kreisringförmige Dichtungsanordnung (2) bilden.

6. Dichtungsanordnung nach einem der vorhergehenden Ansprüche, wobei das erste Dichtelement (4) und/oder das zweite Dichtelement (6) als ein Hart-Dichtelement ausgebildet ist/sind.

7. Dichtungsanordnung nach einem der vorhergehenden Ansprüche, wobei das Zwischenstück (8) aus einem elastisch verformbaren Kunststoff ausgebildet ist.

8. Fluidregelventil mit zumindest einer Dichtungsanordnung (2) nach einem der vorhergehenden Ansprüche zur Abdichtung eines Anschlussbereiches des Fluidregelventils.

9. Fluidregelventil nach Anspruch 8 in Gestalt eines Mehrwege-Regelventils.

10. Verwendung eines Fluidregelventils nach Anspruch 8 oder 9 als Kühlwasserregelventil.

11. Verwendung eines Fluidregelventils nach Anspruch 8 oder 9 als Kühlwasserregelventil eines Fahrzeugs.

## Claims

1. Seal arrangement for use in a fluid control valve, comprising:
a first, separate sealing element (4) for sealing abutment against an actuatable valve body of the fluid control valve,
a second, separate sealing element (6) for sealing abutment against a valve housing of the fluid control valve,
and a separate, elastically deformable intermediate piece (8), which is arranged between the first sealing element (4) and the second sealing element (6) and which serves for elastically spacing the two sealing elements (4, 6) apart,
wherein, at least in an installed state of the seal arrangement (2) in the fluid control valve, the first sealing element (4) and the second sealing element (6) are joined to one another in a form-fitting manner in an axial direction of the seal arrangement,
wherein, on two mutually oppositely situated end sides of the two sealing elements (4, 6), there is formed in each case one encircling projection (4^{l}, 6^{l}), wherein the mutually oppositely situated projections (4^{l}, 6^{l}) engage one into the another in a form-fitting manner, by at least partially overlapping one another in the axial direction, either already in an assembled state of the seal arrangement or for the first time as a result of the compression of the intermediate piece (8) in an installed state of the seal arrangement in the fluid control valve,
**characterized in that**
the two projections (4^{l}, 6^{l}) are arranged at the inside with respect to a seal opening (7), such that the intermediate piece (8) sealingly encloses the overlap, situated at the inside in relation thereto, of the two projections (4^{l}, 6^{l}).

2. Seal arrangement according to Claim 1, wherein the first sealing element (4) and the second sealing element (6) are joined to one another in a form-fitting manner already in an assembled state of the seal arrangement (2).

3. Seal arrangement according to either of the preceding claims, wherein the intermediate piece (8) has an encircling, hydraulically force-boosting groove on the outside.

4. Seal arrangement according to Claim 3, wherein the groove is of V-shaped form.

5. Seal arrangement according to one of the preceding claims, wherein the two sealing elements (4, 6) and the intermediate piece (8) are each of ring-shaped form and form a circular-ring-shaped seal arrangement (2).

6. Seal arrangement according to one of the preceding claims, wherein the first sealing element (4) and/or the second sealing element (6) are/is formed as a hard sealing element.

7. Seal arrangement according to one of the preceding claims, wherein the intermediate piece (8) is formed from an elastically deformable plastic.

8. Fluid control valve having at least one seal arrangement (2) according to one of the preceding claims for sealing off a connection region of the fluid control valve.

9. Fluid control valve according to Claim 8, in the form of a multi-way control valve.

10. Use of a fluid control valve according to Claim 8 or 9 as a cooling-water control valve.

11. Use of a fluid control valve according to Claim 8 or 9 as a cooling-water control valve of a vehicle.

## Revendications

1. Agencement d'étanchéité destiné à être utilisé dans une soupape de régulation de fluide, comprenant :
un premier élément d'étanchéité séparé (4) destiné à être appliqué de manière étanche contre un corps de soupape réglable de la soupape de régulation de fluide,
un deuxième élément d'étanchéité séparé (6) destiné à être appliqué de manière étanche contre un boîtier de soupape de la soupape de régulation de fluide, ainsi qu'une pièce intermédiaire séparée (8), déformable élastiquement, qui est agencée entre le premier élément d'étanchéité (4) et le deuxième élément d'étanchéité (6) pour l'espacement élastique des deux éléments d'étanchéité (4, 6),
le premier élément d'étanchéité (4) et le deuxième élément d'étanchéité (6) étant joints l'un à l'autre par complémentarité de forme dans une direction axiale de l'agencement d'étanchéité au moins dans une position d'installation de l'agencement d'étanchéité (2) dans la soupape de régulation de fluide,
une saillie périphérique (4', 6') étant respectivement formée sur deux côtés frontaux opposés l'un à l'autre des deux éléments d'étanchéité (4, 6), les saillies opposées l'une à l'autre (4', 6') s'engageant l'une dans l'autre par complémentarité de forme soit déjà dans une position de montage de l'agencement d'étanchéité, soit seulement par la compression de la pièce intermédiaire (8) dans une position d'installation de l'agencement d'étanchéité dans la soupape de régulation de fluide, par le fait qu'elles se chevauchent au moins partiellement dans la direction axiale, **caractérisé en ce que**
les deux saillies (4', 6') sont agencées à l'intérieur par rapport à une ouverture d'étanchéité (7), de telle sorte que la pièce intermédiaire (8) entoure de manière étanche le chevauchement des deux saillies (4', 6') situé à l'intérieur.

2. Agencement d'étanchéité selon la revendication 1, dans lequel le premier élément d'étanchéité (4) et le second élément d'étanchéité (6) sont déjà joints l'un à l'autre par complémentarité de forme dans une position de montage de l'agencement d'étanchéité (2).

3. Agencement d'étanchéité selon l'une quelconque des revendications précédentes, dans lequel la pièce intermédiaire (8) présente une rainure périphérique extérieure qui renforce la force hydraulique.

4. Agencement d'étanchéité selon la revendication 3, dans lequel la rainure est configurée en forme de V.

5. Agencement d'étanchéité selon l'une quelconque des revendications précédentes, dans lequel les deux éléments d'étanchéité (4, 6) et la pièce intermédiaire (8) sont respectivement configurés sous forme annulaire et forment un agencement d'étanchéité (2) en forme d'anneau de cercle.

6. Agencement d'étanchéité selon l'une quelconque des revendications précédentes, dans lequel le premier élément d'étanchéité (4) et/ou le deuxième élément d'étanchéité (6) est/sont configuré(s) sous la forme d'un élément d'étanchéité dur.

7. Agencement d'étanchéité selon l'une quelconque des revendications précédentes, dans lequel la pièce intermédiaire (8) est formée en une matière plastique déformable élastiquement.

8. Soupape de régulation de fluide avec au moins un agencement d'étanchéité (2) selon l'une quelconque des revendications précédentes pour étanchéifier une zone de raccordement de la soupape de régulation de fluide.

9. Soupape de régulation de fluide selon la revendication 8 sous la forme d'une soupape de régulation à plusieurs voies.

10. Utilisation d'une soupape de régulation de fluide selon la revendication 8 ou 9 en tant que soupape de régulation d'eau de refroidissement.

11. Utilisation d'une soupape de régulation de fluide selon la revendication 8 ou 9 en tant que soupape de régulation d'eau de refroidissement d'un véhicule.
